# EUROPEAN PATENT SPECIFICATION

(11) **EP 3 827 648 B1**
(45) Date of publication and mention of the grant of the patent: **06.09.2023**
(21) Application number: 19212641.5
(22) Date of filing: 29.11.2019
(51) Int. Cl.: A01B 3/46, A01B 15/14

(54) **FRAME FOR AGRICULTURAL IMPLEMENTS**
RAHMEN FÜR LANDWIRTSCHAFTLICHE GERÄTE
CADRE POUR OUTILS AGRICOLES

(43) Date of publication of application: 02.06.2021
(73) Proprietor: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(56) References cited:
- EP-A1- 2 705 740
- DE-U1- 8 808 838
- FR-A1- 2 912 866
- US-A1- 2010 307 779
- US-B2- 10 051 783

## Description

### Background of the Invention

The present disclosure relates to a frame for an agricultural implement, particularly, but not exclusively, to a frame for an agricultural plough. Other aspects relate to an agricultural implement comprising the frame and an agricultural machinery comprising the agricultural implement connected to a tractor.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective alternatives of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Ploughs typically include a plurality of plough bodies connected to a plough frame in a laterally offset manner. Each plough body is connected to the plough frame (or main frame) via corresponding beams. The plough frame, in turn, is connected to a towing or pushing vehicle via a headstock arranged at a front or back end of the frame.

Most modern ploughs are of the reversible type, in which the main frame of the plough is rotatable by 180 degrees (reversed) with respect to the headstock. A turning cylinder attached to the headstock may be used to rotate (reverse) the plough. Before rotating the plough, the main frame is lifted by a towing vehicle that is connected to the headstock end of the frame. The reversal process may commence once the main frame is lifted sufficiently high that all of the plough bodies are elevated above the ground. During rotation of the so elevated main frame, a first set of plough bodies, which is initially arranged below the main frame (first configuration), is transferred to the top of the main frame. At the same time, a second set of plough bodies, which is initially arranged on top of the main frame, is then transferred to a position below the main frame. The reversible plough is then in its second configuration. This process works both ways, such that the main frame may also be rotated back to its first configuration. Whenever the plough is reversed, the first and the second set of plough bodies swap position.

Depending on the number of plough bodies provided, ploughs can weigh several tons, a weight that is lifted by the towing vehicle during every reversal process. As the plough bodies are lifted off the ground, the plough weight is transferred to the tractor via the main frame and the headstock. It follows that the main frame is required to withstand significant and repeated bending moments without failure. Main frames that exhibit the required stability are likely to be large and heavy and may cause increased fuel consumption of the ploughing machinery. This is particularly problematic in view of ever increasing demands to increase fuel efficiency and reduce environmental impact. Similarly, farmers tend to prefer smaller towing vehicles with lower overall performance, resulting in a need for lighter ploughs that may be lifted with smaller machinery.

In view of the aforementioned problem, there is a need for improved plough frames.

It is an aim of the present invention to solve or at least ameliorate one or more problems of the prior art.

DE8808838 (U1) describes a plough with a device for adjusting the cutting width of the plough body.

EP2705740 (A1) describes a rotary plough having a plough frame that is provided on a ploughshare row with plough portions.

FR2912866 (A1) describes a machine having a main chassis with side rails and crosspieces on which tools e.g. tines, are arranged.

US2010307779 (A1) describes an agricultural implement including a first wing tool bar and a second wing tool bar on each lateral side of the implement.

US2017049041 (A1) describes a wheel assembly for a multi-row planter comprising a wheel, a connection assembly, and a piston assembly.

### Summary of the Invention

Aspects and embodiments of the disclosure provide an agricultural implement and an agricultural machinery as claimed in the appended claims.

According to a first aspect of the present disclosure, there is provided a main frame according to the subject-matter of claim 1.

The main frame is able to support a plurality of ground engaging tools, the main frame extending between a first end that is connectable to a vehicle and an opposite, second end. The main frame exhibits a varying strength between its first and second ends, wherein parts of the frame that are subject to higher loads, when in use, exhibit higher strength than parts of the frame that are subject to lower loads, when in use.

In this specification, the term "higher loads" and "lower loads" may refer to loads higher or lower than a reference load that may be determined by the manufacturer. In one example, the reference load may be the average load acting across the length of the main frame between its first and second end. When defining an average or reference load, a reference strength may be selected, which is capable of withstanding the reference load. According to this disclosure, parts of the main frame that are subject to loads that are higher than the "reference load" are then chosen to exhibit a higher strength than the "reference strength", whereas parts of the frame that are subject to lower loads than the "reference load" are formed to exhibit a lower strength than the "reference strength".

The term "strength" may be the ability of the material(s) of the frame to withstand an applied load without failure or plastic deformation. A load applied to the frame will induce internal forces within the frame called stresses. The stresses acting on the material can cause deformation of the material in various manners including breaking them completely. The applied loads may be axial (tensile or compressive), or rotational (strength shear). The stresses and strains that develop within the frame may be calculated in order to assess the load capacity of the frame. Once the stress and strain within the frame is known, the desired strength (load carrying capacity) of the frame may be calculated. The frame may then be designed to exhibit a varying strength along the length of the frame, matching the stress profile calculated previously.

The main frame of the present disclosure may exhibit an overall reduced weight in comparison to traditional, oversized main frames. Moreover, varying the strength across the length of the main frame between the first and second end, may also shift the centre of gravity such that the lifting forces required to elevate the main frame may be reduced and, therefore, enable the use of smaller agricultural vehicles.

The parts of the frame that are subject to higher and/or lower loads may either be identified experimentally or by simulation. Suitable calculation methods are readily available and shall not be the concern of this disclosure.

In one embodiment of the present disclosure, the strength of the main frame decreases from the first end towards the second end. The strength may decrease continuously between the first end and the second end. Particularly in plough applications, the first end (e.g. the headstock end) of the main frame is subject to high loads, whereas the opposite, second end of the main frame may only be subject to the load created by the weight of the implement wheel, such that a minimum load is expected on the second end of the main frame.

In another embodiment, the cross-section of the main frame at the first end is larger than a cross-section of the main frame at the second end. In other words, the cross-section of the main frame may reduce between the first and the second end of the main frame. The areas exhibiting a larger cross-section may exhibit a higher strength than areas with a smaller cross-section.

The main frame may comprise at least one side wall extending between the first and second end of the main frame, a thickness of the side wall at the first end of the main frame being larger than a thickness of the side wall at the second end of the main frame. The side wall with varying thickness between the first and second ends may either be a unitary part manufactured with different thicknesses along its length. Alternatively, parts of the side wall may be multi-layer assemblies including a plurality of plate-like layers stacked on top of each other in thicker regions whereas thinner regions may be constructed as single-layer areas. The different layers may be permanently connected to each other by gluing or welding, for example.

According to the subject-matter of claim 1, the main frame comprises a plurality of reinforcement members arranged between its first end and its second end, the reinforcement members being located at least on parts of the frame that are subject to higher loads, when in use. In other words, increased strength of the main frame may be provided by reinforcement members that may either be placed inside or outside of the main frame. The reinforcement members may either be removably connected to or be a unitary part of the main frame. The density of the reinforcement members may decrease from the first end towards the second end. In one example, there may be more reinforcement members per unit area of the main frame at the first end of the frame than at the second end.

According to the subject-matter of claim 1, the main frame comprises at least two side walls extending between the first and the second end of the main frame, the reinforcement members extending between the at least two side walls of the main frame. Accordingly, rather than constructing the main frame with a rectangular cross-section, the latter may be formed by providing two side walls only connected by reinforcement members.

According to the subject-matter of claim 1, the reinforcement members are reinforcement struts. The reinforcement struts may be struts extending between the first and second side walls of the main frame, either perpendicular to the side walls or at oblique angles. Alternatively, the struts may be arranged in a honeycomb pattern between the first and second side walls.

According to another embodiment, the main frame comprises at least one side wall extending between the first and second end of the main frame, wherein the reinforcement members are reinforcement panels attached to the at least one side wall. As indicated above, the reinforcement panels may be used to increase the thickness in parts of the main frame that are subject to higher loads, when in use. The reinforcement panels may extend in a plane parallel to the first and/or the second side wall and may be attached to an inside or outside surface of the corresponding side wall. The side wall may be provided with one or more reinforcement panels, depending on the expected load distribution along the length of the side wall.

The main frame may comprise at least one side wall extending between the first and the second end of the main frame, the side wall comprising one or more openings. The size and/or the number of the openings may increase towards the second end of the main frame. According to this embodiment, rather than increasing the strength of high load areas of the frame, varying the strength may be achieved by reducing the strength (e.g. by creating openings or voids within the frame structure) in low load areas. In this variant, the strength of the frame may generally be designed to withstand the highest loads expected when in use. Lower load areas are then treated to create more voids per unit area of the main frame that will reduce the strength and the weight in those areas. The one or more openings may be created by machining or laser cutting parts of the at least one side wall.

In yet another embodiment, the main frame comprises at least one side wall extending between the first and second end of the main frame, the at least one side wall comprising a plurality of modular plates removably connected to each other. In one example, the side wall may comprise a variety of modular plates with different thicknesses arranged next to each other to create the side wall. A first, thicker modular plate may be arranged at the first end of the main frame, whereas one or more further modular plates with reduced thickness may be arranged towards the second end. The modular plates may be removably or permanently attached to each other. A range of differently sized plates may be fabricated and connected to each other to create customised main frames able to withstand various different load configurations. The modular plates may also be used to repair parts of the main frame that have unexpectedly failed, without the need to replace the entire main frame.

According to another aspect of the present disclosure, there is provide an agricultural implement comprising the above main frame and a plurality of ground engaging tools connected to the main frame. In one embodiment, the agricultural implement may be a plough, for example a reversible plough, comprising one or more plough bodies connected to the main frame.

In other embodiments of the disclosure, an agricultural machinery is provided comprising the above agricultural implement connected to the front and/or rear of an agricultural vehicle, e.g. a tractor.

The agricultural vehicle may include one or more control devices, such as but not limited to programmable or non-programmable processors. Similarly, the agricultural implement may include one or more control devices, such as but not limited to programmable or non-programmable processors. Additionally, or alternatively, the agricultural implement may be controlled by one or more control devices of the agricultural vehicle. Similarly, the agricultural vehicle may be controlled by one or more control devices of the agricultural implement.

The agricultural vehicle and/or the agricultural implement may be remote controlled, e.g. from a farm office. Accordingly, the agricultural vehicle may include one or more communication interfaces for connection to a remote processor and/or a remote controller. Similarly, the agricultural implement may include one or more communication interfaces for connection to a remote processor and/or a remote controller.

### Brief Description of the Drawings

One or more embodiments of the present disclosure will now be described by way of example only, with reference to the accompanying drawings, in which:
Figures 1A to 1C show various views of an agricultural plough;
Figure 2 shows a schematic view of an agricultural machinery in a working field;
Figure 3A shows a main frame for an agricultural implement according to an embodiment of the present disclosure;
Figure 3B shows a main frame for an agricultural implement according to an embodiment of the present disclosure;
Figure 3C shows a main frame for an agricultural implement according to an embodiment of the present disclosure;
Figure 3D shows a main frame for an agricultural implement according to an embodiment of the present disclosure;
Figure 3E shows a main frame for an agricultural implement according to an embodiment of the present disclosure;
Figures 4A to 4H shows schematic cross-sections of main frames according to various embodiments of the present disclosure;
Figures 5A to 5C show top views of various modular main frames according to other embodiments of the present disclosure.

### Detailed Description of the Drawings

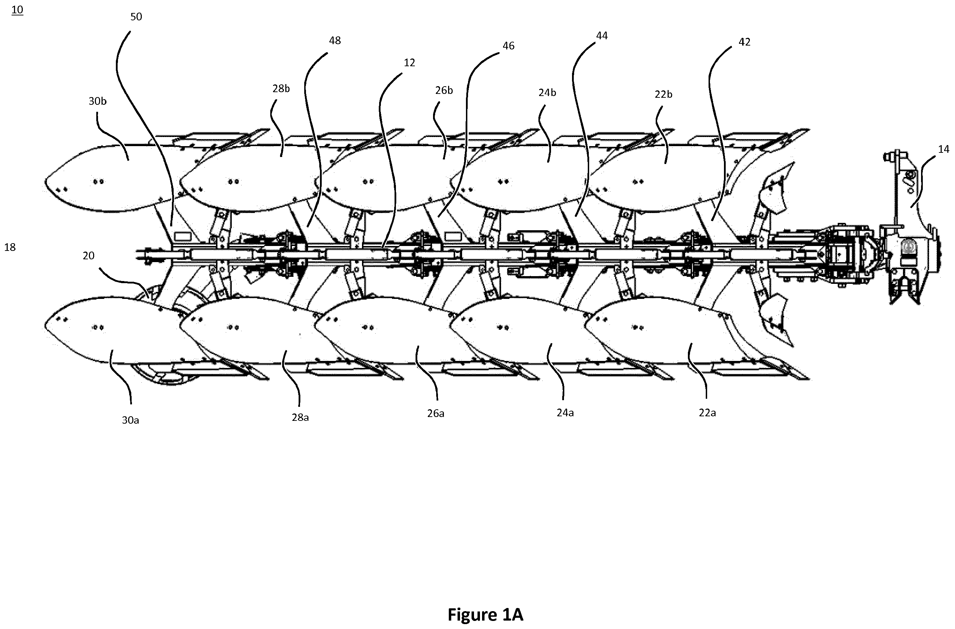

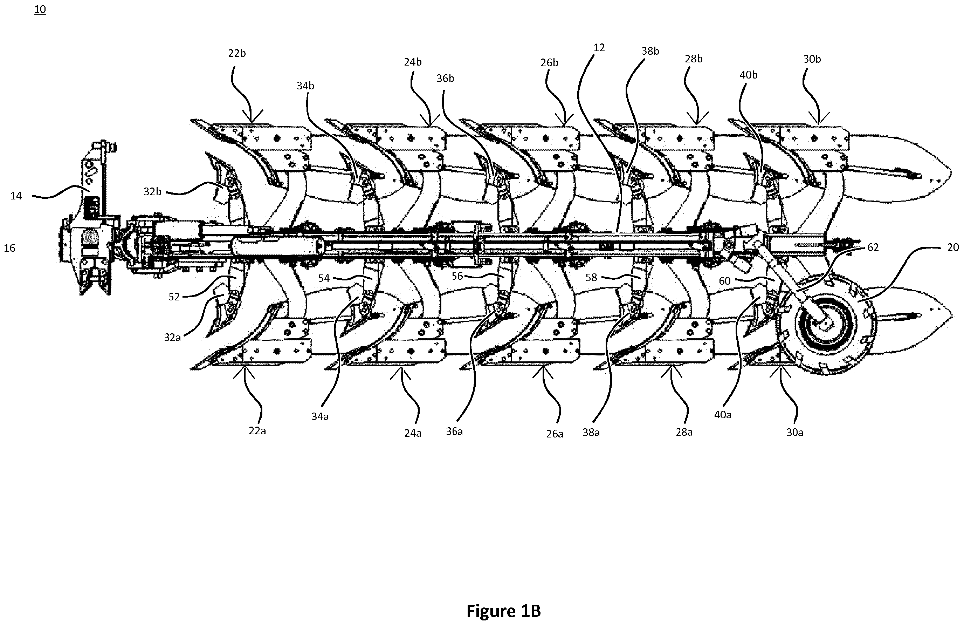

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 extends between a headstock 14 at a first, front end 16 of the plough towards a second, rear end 18 of the plough. The main frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the main frame 12 by means of beams 42, 44, 46, 48, 50. Each of the beams 42, 44, 46, 48, 50 has a substantially Y-shaped structure to support pairs of plough bodies.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

Skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the main frame 12 by means of a mounting assembly 52, 54, 56, 58, 60.

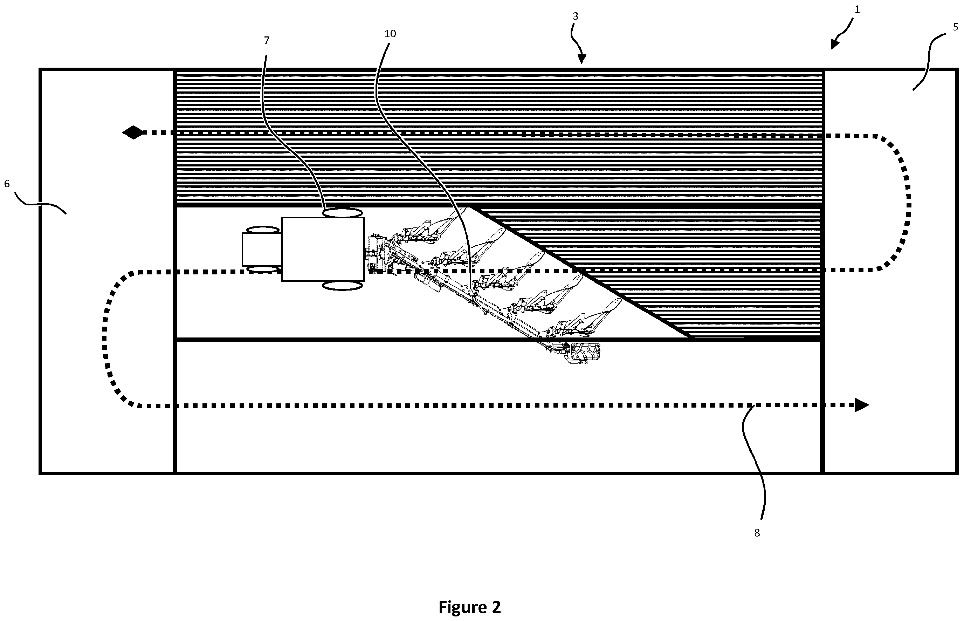

Turning to Figure 2, a typical operation of agricultural machinery comprising a tractor 7 and a plough 10 is described. In use, the plough 10 is drawn as an attachment (implement) behind a towing vehicle (e.g. tractor 7). It will be appreciated that it is equivalently feasible to locate the plough 10 in front or both in front and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor, when the plough is in its transfer position (on the headlands). In other words, the plough is then exclusively supported by the tractor 7 via headstock 14 and maybe lifted off the ground with a lift cylinder of a tractor linkage.

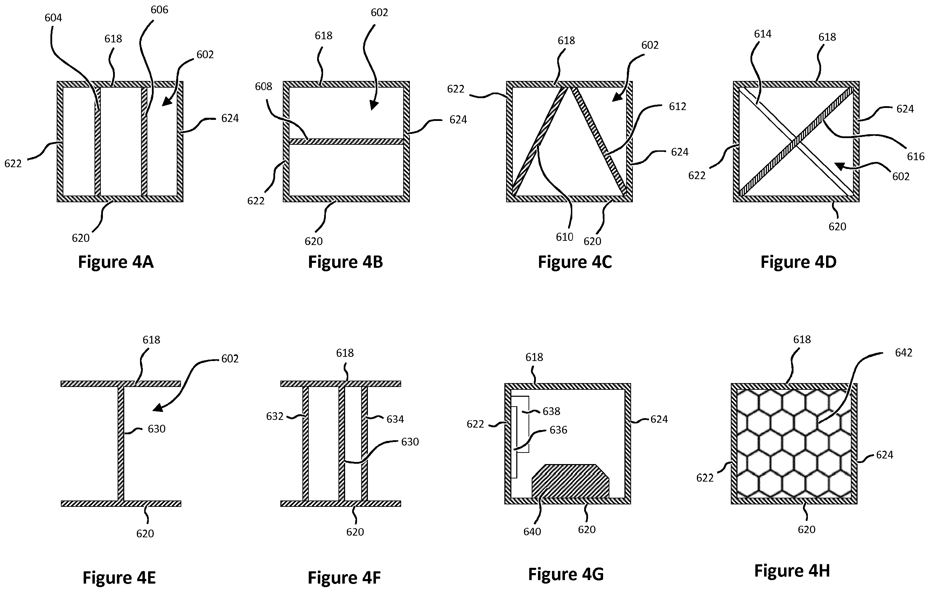

During the turning movement on the headlands, the plough 10 is also reversed. That is, the main frame 12 is rotated by 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees.

In its first configuration shown in Figures 1A to 1C, the plough 10 is set up such that a first plurality of ground engaging tools, such as plough bodies 22a, 24a, 26a, 28a, and 30a, are in contact with the soil. In its second configuration (not illustrated), the plough 10 is set up such that a second plurality of ground engaging tool, such as plough bodies 22b, 24b, 26b, 28b, and 30b, are in contact with the soil.

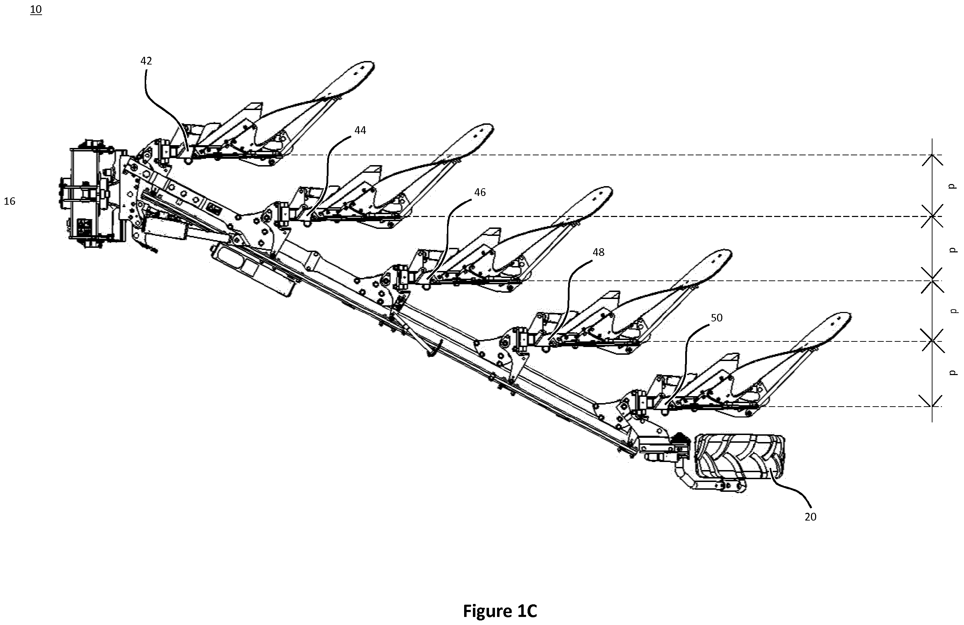

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the main frame 12 is rotated by 180 degrees (reversed) with respect to the headstock 14. A turning cylinder (not shown), attached to the headstock 14 is typically used to rotate (reverse) the plough 10. During rotation of the main frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same end of the field, irrespective of the tractor's orientation.

It will be appreciated that agricultural implements like the plough 10 in Figures 1A to 1C have a significant weight, which needs to be lifted by an agricultural vehicle (e.g. a tractor) at the end of each run. The weight of the plough 10 is transferred to the tractor via the headstock 14 and the main frame 12 attached to the headstock 14. It follows that the integrity of the main frame 12 needs to be sufficient to withstand the bending moment introduced by the plough bodies 22a, 22b, 24a, 24b, 26a, 26b, 28a, 28b, 30a, 30b and the skimmers 32a, 32b, 34a, 34b, 36a, 36b, 38a, 38b, 40a and 40b. One solution may be to construct a main frame that has a constant strength along its length, which substantially exceeds the stability requirements set by the ground engaging tools of the plough 10, particularly in areas that are subject to lower loads. However, in order to provide a more lightweight main frame, the present disclosure suggests constructing the main frame in such a way that parts of the main frame that are subject to higher loads are constructed with a higher strength, whereas parts of the main frame that are subject to lower loads are constructed with a lower strength. Embodiments of such main frames for agricultural implements, such as ploughs, are described in more detail below with reference to the remaining figures.

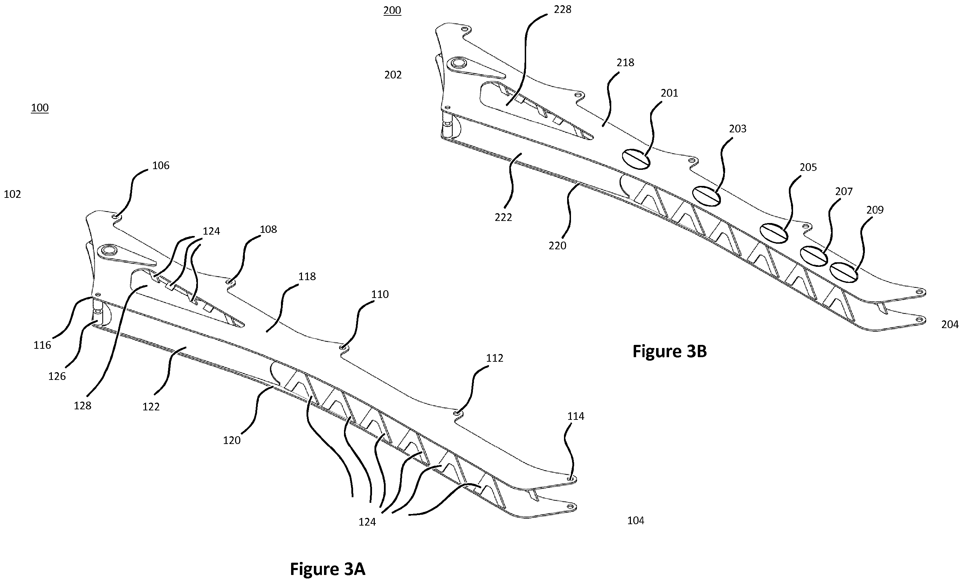

Figure 3A shows an embodiment of a main frame 100 for an agricultural implement, such as the above plough 10, according to an embodiment of the present disclosure. The main frame 100 has a first end 102 that may be connected to a headstock of the agricultural implement, for example by a linkage arrangement (not shown). The main frame 100 extends from the first end 102 towards an opposite, second end 104. In one example, an implement wheel (not shown) may be attached to the main frame 100 at the second end 104, similar to the implement wheel 20 of Figures 1A to 1C.

The main frame 100 comprises five lugs 106, 108, 110, 112, 114. Each of the lugs 106, 108, 110, 112, 114 is capable of supporting a beam, which in turn may support ground engaging tools (e.g. plough bodies) of the agricultural implement. In detail, the first lug 106 may be used to attach a first beam. A second lug 108 may be used to attach a second beam. A third lug 110 may be used to attach a third beam. A fourth lug 112 may be used to attach a fourth beam. A fifth lug 114 may be used to attach a fifth beam. In the embodiment of Figure 3A, the five lugs 106, 108, 110, 112, 114 are equidistantly distributed along the length of the main frame 100 between its first end 102 and its second end 104.

The main frame 100 is designed with varying strength along its length. To this end, the main frame has a cross-section that changes along the length of the main frame 100 between the first end 102 and second end 104. In the embodiment of Figure 3A, the cross-section of the main frame 100 increases between the first lug 106 and the second lug 108 until it reaches an intermediate point 116 along the length of the main frame 100 at which the cross-section starts to decrease. In this example, the frame has its maximum cross-sectional area at the intermediate point 116. From the intermediate point 116 towards the second end 104, the cross-section of the main frame 100 reduces in size, generally, continuously. The strength of the main frame 100 may be directly proportional to the size of its cross-section. Accordingly, in the embodiment of Figure 3A, the main frame's 100 strength increases gradually from the first end 102 towards the intermediate point 116. From the intermediate point 116 towards the second end 104, the strength gradually decreases. This design will provide the main frame 100 with increased strength between the first and second lugs 106, 108, whereas the strength decreases towards the second end 104. This is particularly advantageous, because the bending moments at the front end 102 of the main frame 100 may be higher than the bending moments observed at the second end 104 of the main frame 100.

The main frame 100 comprises a first side wall 118 and a second side wall 120. In the embodiment of Figure 3A, both side walls 118 and 120 have substantially the same shape. When in use, the main frame 100 will be connected to the headstock such that the first side wall 118 will be an upper side wall in the first configuration of the agricultural implement, whereas the second side wall 120 will be a lower side wall in the first configuration. Of course, when the frame main 100 is rotated to its second configuration, the second side wall 120 will be the upper side wall, whereas the first side wall 118 will be a lower side wall.

A third side wall 122 extends partly along the length of the main frame 100 between the first end 102 and the second end 104. The third side wall 122 can extend continually along the entire length of the main frame 100, only partially along the length of the main frame 100, or intermittently along some or all of the length. The third side wall 122 extends perpendicularly to the first and second side walls 118, 120 and connects the first and second side walls 118, 120 along at least a portion of their side edges. A fourth side wall (not shown) is arranged opposite of the third side wall 122 and extends between corresponding side edges of the first and second side walls 118, 120. The fourth side wall can extend along some or all of the length of the main frame 100 in the same way as the third side wall 122. It will be understood that the strength of the fourth side wall may also be varied, similar to the first, second and third side walls 118, 120, 122.

A plurality of reinforcement members 124 are arranged between the first and second side walls 118, 120. The reinforcement members 124 are V-shaped reinforcement struts connecting the first and second side walls 118, 120 along their side edges. Voids are provided between adjacent ones of the V-shaped, second reinforcement members 124. Accordingly, the main frame 100 of Figure 3A is a partially open frame structure that allows access to the inside of the frame 100 via the various voids between the reinforcement members 124. The inclusion of these voids represents another way of varying the strength of the main frame 100 along its length.

An actuator-attachment-fixture 126 is arranged between the first and second side walls 118, 120 at the intermediate point 116. The actuator-attachment-fixture 126 is able to receive one end of an actuator (not shown) that is configured to move the main frame 100 laterally, when in use. The actuator may be a hydraulic actuator, more particularly a hydraulic cylinder used to change the angle of the main frame 100 with respect to the headstock 14. In a plough implement, changing the angle of the main frame 100 with respect to the headstock results in an adjustment of the ploughing width. Accordingly, the hydraulic actuator that may be attached one end to the actuator-attachment-fixture 126 may be a width adjustment actuator.

The main frame 100 of Figure 3A further includes a first opening 128 arranged between the first end 102 and the second end 104 of the main frame 100. In particular, the first opening 128 is provided in the first side wall 118 to create a further void for weight reduction and access to the inside of the main frame 100.

Turning to Figure 3B, there is shown another embodiment of the main frame according to the present disclosure. The main frame 200 of Figure 3B has a similar structure to the main frame 100 of Figure 3A. Parts with a similar or identical functionality are labelled with corresponding reference signs increased by 100. In the embodiment of Figure 3B, in addition to the first opening 228, the main frame 200 of Figure 3B includes a plurality of further openings 201, 203, 205, 207, 209. The additional openings 201 to 209 also extend through the first side wall 218 of the frame 200. Of course, it is equivalently feasible to add similar openings in the second, the third, or the fourth side wall in addition to or instead of openings 201 to 209.

As illustrated in Figure 3B, the density of the openings 201 to 209 increases towards the second end 204 of main frame 200. In other words, the number of the openings per unit area of the main frame 200 increases towards the second end 204 of the main frame. Generally, the main frame 200 of this embodiment will include more openings/voids per unit area towards the second end 204 than at the first end 202. As a consequence, the strength of the main frame 200 reduces from the first end 202 towards the second end 204, as does the weight due to openings 202 to 210. In other embodiments, the size and/or the distance of the openings may vary across the length of the main frame.

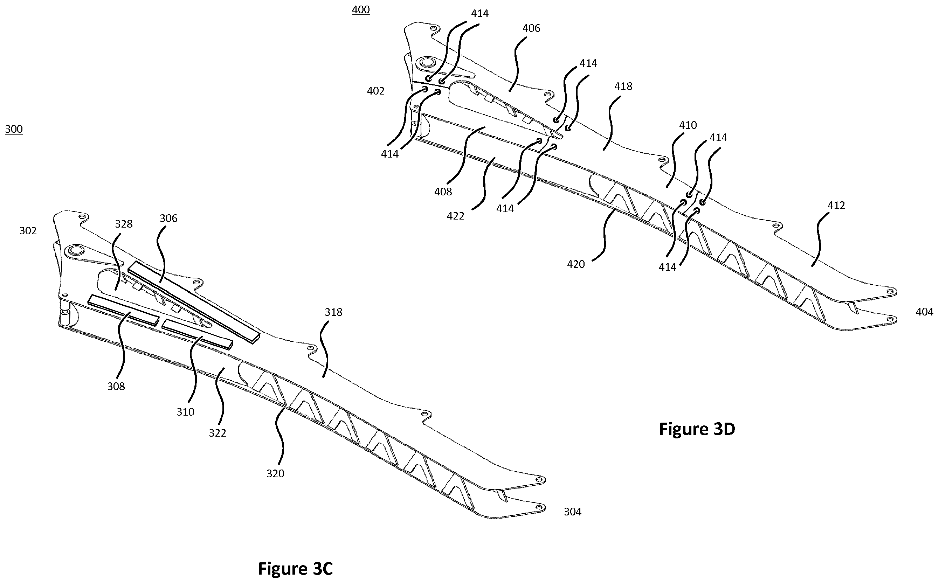

Another way of varying the strength of the main frame across its length is illustrated in the embodiment in Figure 3C. The main frame 300 of Figure 3C is similar to the main frame 100 shown in Figure 3A and features that are not described in further detail shall be assumed to be identical. In contrast to the main frame 100 of Figure 3A, the main frame 300 of Figure 3C comprises additional reinforcement members 306, 308, and 310. The reinforcement members 306, 308, 310 may be reinforcement strips or plates attached to the frame 300 between its first and second ends 302, 304. In the example of Figure 3C, the reinforcement members 306, 308, and 310 are attached to the first side wall 318. It will be understood that similar reinforcement members may additionally or alternatively also be attached to the second and third side walls 320, 322.

The additional reinforcement members 306, 308, 310 shown in Figure 3C are reinforcement struts that locally increase the thickness and, therefore, the strength of the main frame 300. Each of the reinforcements members 306 to 310 may have a different shape and/or thickness, which generally corresponds to the expected load that will be applied to the respective parts of the main frame 300 during use of the plough. The reinforcements members 306, 308, and 310 may be permanently or removably connected to the main frame 300. In the example of Figure 3C, the reinforcement members 306, 308 and 310 are permanently connected to side wall 318, for example by welding or gluing. Alternatively, the reinforcement members 306, 308 and 310 can be integral to the beam structure; for example they can be cast into the beam. The reinforcement members 306, 308, 310 are arranged around opening 328 to increase the strength of the surrounding area of the first side wall 318, whilst allowing access to the inside of the main frame 300 via opening 328. It will be understood that strip- or plate-shaped reinforcement members may be used on any of the side walls 318, 320, 322 to locally increase the strength of the main frame 300.

Another embodiment of the main frame according to the present disclosure is shown in Figure 3D. The main frame 400 of Figure 3D has a generally identical shape to the main frame 100 shown in Figure 3A. However, in contrast to the main frame 100 of Figure 3A, the main frame 400 has a first side wall 418 that is made up of individual pieces. In particular, the first side wall 418 comprises a first piece 406, a second piece 408, a third piece 410 and a fourth piece 412. The first piece 406 is arranged at the first end 402 of the main frame 400. Next and parallel to the first piece 406 is a second piece 408, which is also arranged close to the first end 402 of the main frame 400. A third piece 410 is connected to both the first and second pieces 406, 408. The third piece 410 is arranged centrally between the first end 402 and the second end 404 of the main frame 400. A fourth piece 412 is arranged at the second end 404 of the main frame 400 and connected to a second end of the third piece 410. In other words, the third piece 410 acts as a central piece that connects the first, second and fourth pieces 406, 408, 412.

The individual pieces 406 to 412 of the first side wall 418, in this example, are removably connected to each other by means of fastening members 414. The fastening members 414 may be attached to connector plates (not shown) arranged on the inside of side wall 418 and spanning the edges between the different pieces 406 to 412. In some examples the connector plates can also be used to provide additional strength to reinforce specific sections of the main frame, thereby providing a double function. For instance, a connector plate can be dimensioned and positioned such that it at least partially surrounds an opening in a side wall to provide increased strength around the opening. As another example, a connection plate may be dimensioned such that it can connect three or more pieces 406 to 412 of a side wall. In this way, the connection plate can be big enough such that it provides a significant increase to the strength of the main frame in the vicinity of the connection plate.

It will be understood that, in some embodiments, the individual pieces may also be permanently connected to each other.

Each of the pieces 406 to 412 may have a different strength so as to vary the strength of the main frame 400 between the first end 402 and second end 404. Accordingly, the first and second pieces 406, 408 may be stiffer than the third piece 410, which in turn may be stiffer than the fourth piece 412. In one example, the strength of the individual pieces may be determined by known heat-treatment processes. Other alternatives include provision of pieces with different thickness and/or openings extending through some or all of the pieces.

Of course, the embodiment of Figure 3D is not limited to the number of pieces shown or their respective sizes and shapes. Rather, any subdivision of the side wall 418 into separate pieces may be applied to achieve the strength variation across the length of the main frame 400. Of course, any of the side walls 418, 420, 422 of the main frame 400 may be made up of a plurality of individual pieces that are either removably or permanently connected to each other.

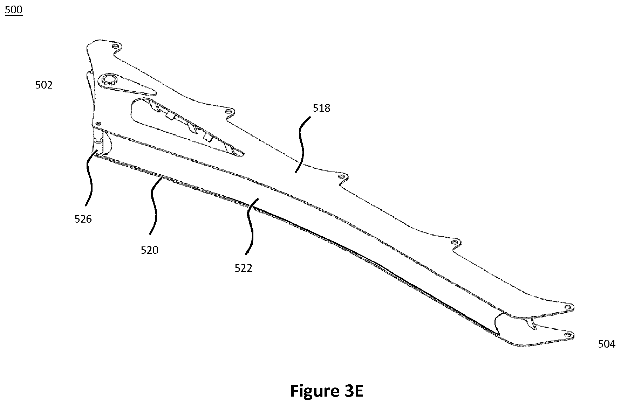

With reference to Figure 3E, there is shown another embodiment of a main frame according to the present disclosure. The main frame 500 of Figure 3E is generally identical to the main frame 100 shown in Figure 3A with the exception that a third side wall 522, which connects first and second side walls 518, 520, extends between the fixture 526 and the second end 504. In other words, the third side wall 522 is a solid structure providing strength to the main frame 500 between the fixture 526 and the second end 504.

As with any of the main frames described herein, any of the side walls of Figure 3E can include one or more openings. Such a main frame can include one or more removable covers (not shown) that are located over one or more of the openings. The removable covers can advantageously provide a barrier to debris entering an internal cavity of the main frame. The removable covers are not necessarily designed to increase the strength of the main frame, although in some examples they could do so. In addition, the removable covers can provide a convenient location for including branding of the plough. Also, since the covers are removable, advantageously the branding of a plough can be changed simply by changing the removable covers. Optionally, the removable covers can be made from a material that lends itself to being decorated with a company's brand, such as a plastic.

Further embodiments of the main frame according to the present disclosure will be evident from the illustrations in Figures 4A to 4H. Parts with a similar function across Figures 4A to 4H are labelled with identical reference signs.

Figure 4A shows a schematic cross-section of a main frame according to another embodiment. The main frame in Figure 4A comprises a first side wall 618 and a second side wall 620, which is arranged opposite the first side wall 618. A third side wall 622 and a fourth side wall 624 are arranged transversely to the first and the second side wall 618, 620 and connect the first and second side walls 618, 620 along their side edges. The third side wall 622 and the fourth side wall 624 can be arranged perpendicularly, or nearly perpendicularly, to the first and / or the second side wall 618, 620. In simple terms, the structure of the main frame according to the embodiment represented in Figure 4A is substantially rectangular. However, as will be discussed below, the outer geometry of the main frame does not need to be rectangular, or even a quadrilateral.

Returning to Figure 4A, the side walls 618, 620, 622, 624 define an inner cavity 602 that extends at least partly between the first and second ends of the main frame (not shown). A plurality of reinforcement members 604, 606 are provided within the inner cavity 602 to increase the strength of the main frame in high load bearing areas of the main frame. In the embodiment of Figure 4A, the reinforcement members 604, 606 are reinforcement struts extending between the first side wall 618 and the second side wall 620. The reinforcement members 604, 606 may be separate parts that are permanently or removably connected to the first and second side wall 618, 620, for example by welding. Alternatively, it is also feasible to construct the first and second reinforcement members 604, 606 integrally with one or both of the side walls 618, 620. The number and orientation of the reinforcement members 604, 606 is generally chosen depending on the strength requirements of the respective parts of the main frame. For example, it may be appropriate to include more reinforcement members at a first end of the main frame than at the second end.

Another embodiment is shown in the cross-section of Figure 4B. According to this embodiment, there is provided a reinforcement member 608 (e.g. a reinforcement strut), which extends between the third and fourth side wall 622, 624. Again, the reinforcement member 608 of Figure 4B may either be integrally formed with the side walls 622, 624 or a separate part that is subsequently attached to the side walls 622, 624.

Turning to Figure 4C, there is shown another embodiment, in which reinforcement members 610, 612 are arranged in a V-shape, connecting the first side wall 618 to inner edges of the main frame between the second and third side walls 620, 622 and the second and fourth side walls 620, 624 respectively. In some examples, one or more of the side walls 618, 620, 622, 624 may be omitted along some or all of the length of the main frame. In this way, the outer geometry of the main frame may not rectangular along some or all of the length of the main frame. If the reinforcement members 610, 612 come together at a point, then the omission of the first side wall 618 can result in the main frame having an outer geometry in the shape of a triangle.In Figure 4D, reinforcement members 614, 616 are arranged across the inner cavity 602, for example in an X-shaped manner. A first reinforcement member 614 connects: i) an inner edge between the first side wall 618 and the third side wall 622; ii) with an inner edge between the second side wall 620 and the fourth side wall 624. A second reinforcement member 616 connects: i) an inner edge between the first side wall 618 and the fourth side wall 624; (ii) with an inner edge between the second side wall 620 and the third side wall 622. The two reinforcement members 614, 616 are offset from each other in a longitudinal direction of the main frame. Accordingly, the two reinforcement members 614, 616 of Figure 4D do not intersect each other. However, it is also feasible to provide X-shaped reinforcement members that are arranged in the same plane. Again, the first and second reinforcement members 614, 616 may either be an integral part with the side walls 618, 620, 622, 624 or be manufactured as separate parts and connected to the side walls 618, 620, 622, 624 subsequently.

As with other examples described herein, one or more of the side walls 618, 620, 622, 624 may be omitted along some or all of the length of the main frame. Optionally, the main frame can have an X-shaped cross-sectional shape if all of the side walls 618, 620, 622, 624 are omitted, at least for part of the length of the main frame.

An embodiment of an open main frame structure is illustrated in Figure 4E. In the embodiment of Figure 4E, the main frame has a substantially I-beam like structure. In detail, the first side wall 618 is connected to the second side wall 620 by a single, central wall 630. The central wall 630 extends substantially perpendicular to the first and second side walls 618, 620. According to this embodiment, the inner cavity 602 is accessible from two sides of the main frame. Of course, reinforcement members may be introduced on either side of the central wall 630 to increase the strength of the main frame in high load areas. An example of such additional reinforcement members is illustrated in Figure 4F.

One or more of the examples disclosed herein that include a cavity (such as the inner cavity 602 of Figure 4E), can also include a mounting structure (not shown) inside the cavity. The mounting structure is for securing a cable and/or a hydraulic conduit. The mounting structure may comprise an insert for locating within the cavity. The insert may or may not be made of a resilient material, and may or may not include one or more insert-cavities for receiving a cable and/or a hydraulic conduit. The mounting structure may comprise a clip attached to an inner surface of the frame, for securing a cable and/or a hydraulic conduit. The mounting structure may comprise a tray structure attached to an inner surface of the frame, wherein the tray is for securing a cable and/or a hydraulic conduit located inside it against the inner surface of the frame to which the tray is attached.

Figure 4F shows the I-beam main frame structure of Figure 4E with additional reinforcement members 632, 634. In this embodiment, which may be closer to the first end of the main frame, additional reinforcement members 632, 634 are arranged on either side of the central wall 630. The two additional reinforcement members 632, 634 may be reinforcement struts extending between the first and the second side wall 618, 620. Although depicted as reinforcement struts in Figure 4F, the additional reinforcement members 632, 634 may also be reinforcement walls or plates and may extend in any direction, such as the directions shown in Figures 4A, 4C and 4D.

Turning to Figure 4G, there is shown a cross-section of an embodiment of the main frame including a variety of plate or block-shaped reinforcement members. In the example of Figure 4G, first and second reinforcement members 636, 638 are attached to an inner surface the third side wall 622 of the main frame. These plate-shaped first and second reinforcement members 636, 638 may be welded or glued to the third side wall 622, or integral to the third side wall 622. Of course, it is also feasible to attach similar plate-shaped reinforcement members to any of the other side walls 618, 620, 624. A block-shaped reinforcement member 640, for example, is attached to the second side wall 620 of the main frame. The reinforcement members 636, 638, 640 may be attached to appropriate side walls in high-load areas of the main frame. Also, the reinforcement members 636, 638, 640 may be used to connect separate pieces of a side wall, as discussed with reference to Figure 3D, thereby having a dual function.

Figure 4H shows another exemplary embodiment of a main frame according to the present disclosure. In the embodiment of Figure 4H, a honeycomb-shaped reinforcement member 642 is arranged between the side walls 618, 620, 622, 624. The honeycomb-shaped reinforcement member 642 may be arranged in high-load areas. It may be produced in an extrusion process or via additive manufacturing. Accordingly, in some embodiments, the honeycomb-shaped reinforcement member 642 may be integrally formed together with side wall 618, 620, 622, 624.

It will be appreciated that in order to vary the strength of the main frame along its length, one or more of the structures described with Figures 4A to 4H may be located at some, but not all, locations along the length of the main frame. In this way, the outside geometry of the main frame does not necessarily have to be rectangular along the entire length of the main frame. For instance, the outside geometry could be triangular or a trapezium, or the cross-sectional shape of the main frame could be X-shaped. Alternatively, or additional, one or more of the structures may be provided with varying structural properties along the length of the main frame such as varying thickness or strength.

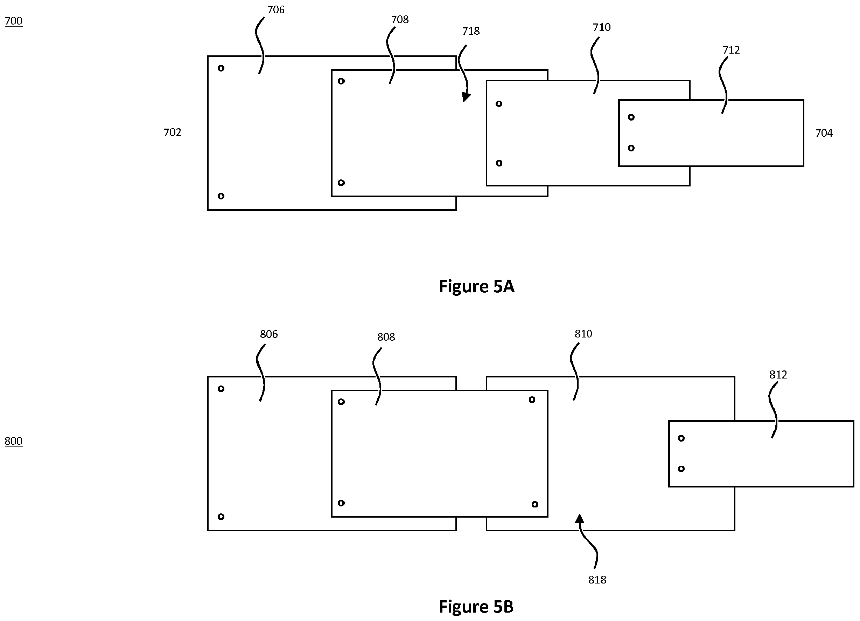

Figure 5A shows a schematic top view of yet another embodiment of a main frame 700 according to the present disclosure. The main frame 700 shown in Figure 5A comprises a first side wall 718, which is made up of a plurality of modular parts. In particular, the side wall 718 comprises a first modular plate 706, a second modular plate 708, a third modular plate 710 and a fourth modular plate 712. The first modular plate 706 is arranged at a first end 702 of the main frame. The fourth modular plate 712 is arranged at a second end 704 of the main frame. The second and third modular plate 708, 710 are arranged between the first and fourth modular plates 706, 712. The modular plates 706 to 712 are arranged in order of size. The first modular plate 706 is larger than the remaining modular plates 708 to 712 and arranged at the first end 702 of the main frame 700. The fourth modular plate 712 is smaller than the other modular plates 706 to 710 and arranged at the second end 702 of the main frame. The second and third modular plate 708, 710 are arranged between the first and fourth modular plate 706, 712 and decrease in size accordingly. It will be understood that Figure 5A is an example in which the strength of the main frame decreases gradually between the first end 702 and the second end 704, and the size of the modular plates 706 to 710 may decrease accordingly.

The modular plates 706 to 712 may alternatively or additionally have varying thicknesses to further simplify construction of the main frame 700 with varying strength. In one embodiment (not shown), the modular plates are identically sized with varying thickness. In yet another embodiment, the modular plates may be identical, whereas two or more of the modular plates may be stacked on top of each other in regions of the main frame that will be subject to higher loads, when in use.

Figure 5B shows another embodiment of a main frame 800 with modular plates 806, 808, 810, 812. The modular plates 806 to 812 make up a side wall 818 of the main frame 800. The example of Figure 5B highlights another way of how the modular plate design may be used to vary the strength of the main frame across its length. To this end, modular plates 806, 810, 812 are substantially identical to modular plates 706, 708, 712 of the embodiment mentioned in Figure 5A. However, the third modular plate 710 of Figure 5A has been replaced by a different, third modular plate 810 in the embodiment of Figure 5B. In this example, the third modular plate 810 is substantially identical in size and shape to the first modular plate 806. In this embodiment, the first and third modular plates 806, 810 may correspond with regions of the main frame 800 that are subject to higher loads when in use, whereas the second modular plate 808 is arranged at a medium load area and the fourth modular plate 812 in a low load area.

The modular plates of Figures 5A and 5B may be premanufactured and arranged between the first and second ends of the corresponding main frames in a manner that suits the load profile predicted or determined for the agricultural implement, such as the plough 10. Accordingly, the modular plate design enables quick and easy customisation of the main frame strength along its length without the need for further machining or prototyping.

Optionally, the main frame of Figure 5A or 5B may include one or more removable covers that are located over a plurality of the modular plates. The removable covers can be located over any discontinuities in the outer profile of the main frame (such as at the transition between different modular plates), thereby providing a continuous outer profile of the main frame. This can be beneficial for preventing any debris from getting stuck in the joins between the modular plates, which could hinder the performance of the plough. The removable covers are not necessarily designed to increase the strength of the main frame, although in some examples they could do so.

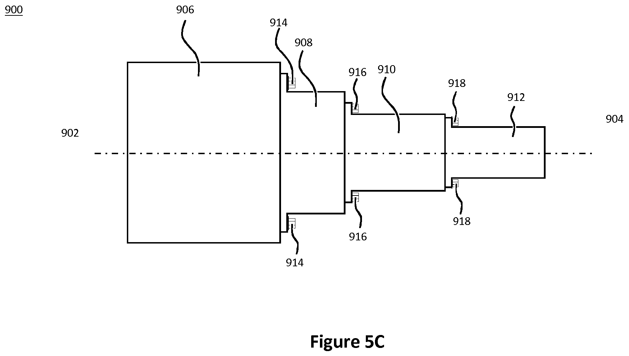

Turning to Figure 5C, there is shown another modular main frame. In this embodiment, the main frame 900 has a generally cylindrical cross-sectional shape. The cylindrical shape of the main frame 900 comprises four modular pieces removably attached to each other. A first cylindrical part 906 is arranged at a first end 902 of the main frame 900. A second cylindrical part 908 is attached to a back end of the first cylindrical part 906 via fastening members 914. A third cylindrical part 910 is removably attached to a back end of the second cylindrical part 908 via fastening members 916. A fourth cylindrical part 912 is attached to a back end of the third cylindrical part 910 via fastening members 918. The fourth cylindrical part 912 is, in turn, arranged at the second end 904 of main frame 900. Similar to the structure of the embodiment shown in Figure 5A, the size of the modular parts 906 to 912 of main frame 900 may decrease gradually from the first end 902 towards the second end 904.

It will be appreciated that the features described with reference to the above embodiments should not be considered in isolation. Rather, the main frame of the present disclosure may include any combination of features that vary the strength of the main frame along its length. For example, the main frame may have a variety of reinforcement members to create a base strength across the main frame's length, whereas openings may be introduced to remove unnecessary weight in low load areas.

The listing or discussion of an apparently prior-published document in this specification should not necessarily be taken as an acknowledgement that the document is part of the state of the art or is common general knowledge.

## Claims

1. A main frame (100) configured for a plough comprising one or more plough bodies connectable to the main frame (100), the main frame (100) being able to support a plurality of ground engaging tools, the main frame (100) extending between a first end (102) that is connectable to a vehicle and an opposite, second end (104), the main frame (100) comprising at least one side wall (118, 120, 122) extending between the first and second end of the main frame (100), the side wall comprising one or more openings (128) such that
the main frame (100) exhibits varying strength between its first and second ends; wherein
parts of the main frame (100) that are subject to higher loads, when in use, exhibit higher strength than parts of the main frame (100) that are subject to lower loads, when in use,
wherein the main frame (100) comprises a plurality of reinforcement members (604, 606, 608) arranged between its first end (102) and its second end (104), at least on parts of the main frame that are subject to higher loads, when in use,
wherein the main frame comprises at least two side walls (618, 620) extending between the first and second end of the main frame (100), the reinforcement members (604, 606, 608) being reinforcement struts extending between the at least two side walls (618, 620) of the main frame (100).

2. The main frame (100) of Claim 1, wherein a size and/or a number of the openings increases towards the second end of the main frame (100).

3. The main frame (100) of Claim 1 or Claim 2, wherein the side wall comprises the one or more openings (128) such that the strength of the main frame (100) decreases from the first end (102) towards the second end (104).

4. The main frame (100) of Claim 3, wherein the strength of the main frame (100) decreases continuously between the first end (102) and the second end (104).

5. The main frame (100) of any of Claims 1 to 4, wherein a cross-section of the main frame (100) at the first end (102) is larger than a cross-section of the main frame (100) at the second end (104).

6. The main frame (100) of any of Claims 1 to 5, wherein a thickness of at least one side wall at the first end of the main frame (100) is larger than a thickness of the side wall at the second end of the main frame (100).

7. The main frame (100) of Claim 1, wherein a density of the reinforcement members (604, 606, 608) decreases from the first end towards the second end.

8. The main frame (100) of Claim 1, wherein the reinforcement members (636, 638) are reinforcement panels attached to the at least one side wall (618, 620, 622, 624).

9. The main frame (100) of any of Claims 1 to 8, wherein the at least one side wall (718, 818) comprises a plurality of modular plates (706, 708, 710, 712, 806, 808, 810, 812) removably connected to each other.

10. The main frame (100) of Claim 9, wherein modular plates (706, 708, 710, 712) that are arranged closer to the first end of the main frame (100) are larger than modular plates that are arranged closer to the second end of the main frame (100).

11. An agricultural implement comprising the main frame (100) of any of Claims 1 to 10 and a plurality of ground engaging tools connected to the main frame (100).

12. The agricultural implement of Claim 11, wherein the agricultural implement is a plough (10) comprising one or more plough bodies connected to the main frame (100).

13. An agricultural machinery comprising a tractor and the agricultural implement according to Claim 11 or 12 connected to the tractor.

## Patentansprüche

1. Hauptrahmen (100), der für einen Pflug mit einem oder mehreren Pflugkörpern ausgebildet ist, die mit dem Hauptrahmen (100) verbindbar sind, wobei der Hauptrahmen (100) dazu ausgebildet ist, eine Mehrzahl von bodeneingreifenden Werkzeugen zu tragen, wobei der Hauptrahmen (100) sich zwischen einem ersten Ende (102), das mit einem Fahrzeug verbindbar ist, und einem gegenüberliegenden zweiten Ende (104) erstreckt, wobei der Hauptrahmen (100) mindestens eine Seitenwand (118, 120, 122) aufweist, die sich zwischen dem ersten und dem zweiten Ende des Hauptrahmens (100) erstreckt, wobei die Seitenwand eine oder mehrere Öffnungen (128) aufweist, so dass
der Hauptrahmen (100) eine variierende Festigkeit zwischen seinem ersten und zweiten Ende aufweist;
wobei Teile des Hauptrahmens (100), die bei Betrieb höheren Belastungen ausgesetzt sind, eine höhere Festigkeit als Teile des Hauptrahmens (100) aufweisen, die bei Betrieb niedrigeren Belastungen ausgesetzt sind,
wobei der Hauptrahmen (100) eine Mehrzahl von Verstärkungselemente (604, 606, 608) an mindestens Teilen des Hauptrahmens aufweist, die bei Betrieb höheren Belastungen ausgesetzt sind, und die zwischen dessen ersten Ende (102) und dessen zweiten Ende (104) angeordnet sind,
wobei der Hauptrahmen mindestens zwei Seitenwände (618, 620) aufweist, die sich zwischen dem ersten und dem zweiten Ende des Hauptrahmens (100) erstrecken, wobei die Verstärkungselemente (604, 606, 608) Verstärkungsstreben sind, die sich zwischen mindestens zwei Seitenwänden (618, 620) des Hauptrahmens (100) erstrecken.

2. Hauptrahmen (100) nach Anspruch 1, wobei eine Größe und/oder eine Anzahl der Öffnungen in Richtung des zweiten Endes des Hauptrahmens (100) zunimmt.

3. Hauptrahmen (100) nach Anspruch 1 oder Anspruch 2, wobei die Seitenwand die eine oder die mehreren Öffnungen (128) aufweist, so dass die Festigkeit des Hauptrahmens (100) von dem ersten Ende (102) in Richtung des zweiten Endes (104) abnimmt.

4. Hauptrahmen (100) nach Anspruch 3, wobei die Festigkeit des Hauptrahmens (100) kontinuierlich zwischen dem ersten Ende (102) und dem zweiten Ende (104) zunimmt.

5. Hauptrahmen (100) nach einem der Ansprüche 1 bis 4, wobei ein Querschnitt des Hauptrahmens (100) an dem ersten Ende (102) größer als ein Querschnitt des Hauptrahmens (100) an dem zweiten Ende (104) ist.

6. Hauptrahmen (100) nach Anspruch 1 bis 5, wobei eine Dicke mindestens einer Seitenwand an dem ersten Ende des Hauptrahmens (100) größer als eine Dicke der Seitenwand an dem zweiten Ende des Hauptrahmens (100) ist.

7. Hauptrahmen (100) nach Anspruch 1, wobei eine Dichte der Verstärkungselemente (604, 606, 608) von dem ersten Ende in Richtung des zweiten Endes abnimmt.

8. Hauptrahmen (100) nach Anspruch 1, wobei die Verstärkungselemente (636, 638) Verstärkungsplatten sind, die an der mindestens einen Seitenwand (618, 620, 622, 624) angebracht sind.

9. Hauptrahmen (100) nach einem der Ansprüche 1 bis 8, wobei die mindestens eine Seitenwand (718, 818) eine Mehrzahl von modularen Platten (706, 708, 710, 712, 806, 808, 810, 812) aufweist, die lösbar miteinander verbunden sind.

10. Hauptrahmen (100) nach Anspruch 9, wobei die modularen Platten (706, 708, 710, 712), die näher an dem ersten Ende des Hauptrahmens (100) angeordnet sind, größer als die modularen Platten sind, die näher an dem zweiten Ende des Hauptrahmens (100) angeordnet sind.

11. Landwirtschaftliches Arbeitsgerät mit dem Hauptrahmen (100) nach einem der Ansprüche 1 bis 10 und einer Mehrzahl von bodeneingreifenden Werkzeugen, die mit dem Hauptrahmen (100) verbunden sind.

12. Landwirtschaftliches Arbeitsgerät nach Anspruch 11, wobei das landwirtschaftliche Arbeitsgerät ein Pflug (10) mit einem oder mehreren Pflugkörpern ist, die mit dem Hauptrahmen (100) verbunden sind.

13. Landwirtschaftliche Maschine mit einem Traktor und dem landwirtschaftlichen Arbeitsgerät nach Anspruch 11 oder 12, das mit dem Traktor verbunden ist.

## Revendications

1. Cadre principal (100) configuré pour une charrue comprenant un ou plusieurs corps de charrue pouvant être reliés au cadre principal (100), le cadre principal (100) pouvant supporter une pluralité d'outils en prise avec le sol, le cadre principal (100) s'étendant entre une première extrémité (102) pouvant être reliée à un véhicule et une seconde extrémité (104) opposée, le cadre principal (100) comprenant au moins une paroi latérale (118, 120, 122) s'étendant entre la première et la seconde extrémité du cadre principal (100), la paroi latérale comprenant une ou plusieurs ouvertures (128) de sorte que le cadre principal (100) présente une résistance variable entre sa première et sa seconde extrémité ;
dans lequel les parties du cadre principal (100) qui sont soumises à des charges plus élevées, lorsqu'elles sont utilisées, présentent une plus grande résistance que les parties du cadre principal (100) qui sont soumises à des charges plus faibles, lorsqu'elles sont utilisées, dans lequel le cadre principal (100) comprend une pluralité d'éléments de renforcement (604, 606, 608) disposés entre sa première extrémité (102) et sa seconde extrémité (104), au moins sur les parties du cadre principal qui sont soumises à des charges plus élevées, lorsqu'elles sont utilisées,
dans lequel le cadre principal comprend au moins deux parois latérales (618, 620) s'étendant entre la première et la seconde extrémité du cadre principal (100), les éléments de renforcement (604, 606, 608) étant des entretoises de renforcement s'étendant entre les au moins deux parois latérales (618, 620) du cadre principal (100).

2. Cadre principal (100) selon la revendication 1, dans lequel une taille et/ou un nombre d'ouvertures augmente vers la seconde extrémité du cadre principal (100).

3. Cadre principal (100) selon la revendication 1 ou la revendication 2, dans lequel la paroi latérale comprend une ou plusieurs ouvertures (128) de sorte que la résistance du cadre principal (100) diminue de la première extrémité (102) vers la seconde extrémité (104).

4. Cadre principal (100) selon la revendication 3, dans lequel la résistance du cadre principal (100) diminue continuellement entre la première extrémité (102) et la seconde extrémité (104).

5. Cadre principal (100) selon l'une quelconque des revendications 1 à 4, dans lequel une section transversale du cadre principal (100) à la première extrémité (102) est plus grande qu'une section transversale du cadre principal (100) à la seconde extrémité (104).

6. Cadre principal (100) selon l'une quelconque des revendications 1 à 5, dans lequel une épaisseur d'au moins une paroi latérale à la première extrémité du cadre principal (100) est supérieure à une épaisseur de la paroi latérale à la seconde extrémité du cadre principal (100).

7. Cadre principal (100) selon la revendication 1, dans lequel la densité des éléments de renforcement (604, 606, 608) diminue de la première extrémité vers la seconde extrémité.

8. Cadre principal (100) selon la revendication 1, dans lequel les éléments de renforcement (636, 638) sont des panneaux de renforcement fixés à au moins une paroi latérale (618, 620, 622, 624).

9. Cadre principal (100) selon l'une quelconque des revendications 1 à 8, dans lequel l'au moins une paroi latérale (718, 818) comprend une pluralité de plaques modulaires (706, 708, 710, 712, 806, 808, 810, 812) reliées de manière amovible les unes aux autres.

10. Cadre principal (100) selon la revendication 9, dans lequel les plaques modulaires (706, 708, 710, 712) qui sont disposées plus près de la première extrémité du cadre principal (100) sont plus grandes que les plaques modulaires qui sont disposées plus près de la seconde extrémité du cadre principal (100).

11. Outil agricole comprenant le cadre principal (100) selon l'une quelconque des revendications 1 à 10 et une pluralité d'outils en prise avec le sol reliés au cadre principal (100).

12. Outil agricole selon la revendication 11, dans lequel l'outil agricole est une charrue (10) comprenant un ou plusieurs corps de charrue reliés au cadre principal (100).

13. Machine agricole comprenant un tracteur et l'outil agricole selon la revendication 11 ou 12 relié au tracteur.
